# EUROPÄISCHE PATENTSCHRIFT

(11) **EP 3 048 243 B1**
(45) Veröffentlichungstag und Bekanntmachung des Hinweises auf die Patenterteilung: **06.09.2017**
(21) Anmeldenummer: 15151762.0
(22) Anmeldetag: 20.01.2015
(51) Int. Cl.: E21D 11/10, C04B 28/04, C04B 28/08

(54) **Verfahren zum Verfüllen eines Ringraums zwischen der Außenfläche eines Tübbingrings und einem ihn umgebenden Baugrund eines Tunnelbauwerks**
Method for filling a ring area between the outer surface of a tunnel section ring and a foundation of a tunnel structure surrounding it
Procédé de remplissage d'un espace circulaire entre la surface extérieure d'un anneau de cuvelage et un sol de fondation d'une structure de tunnel l'entourant

(43) Veröffentlichungstag der Anmeldung: 27.07.2016
(73) Patentinhaber: MC-Bauchemie Müller GmbH & Co. KG Chemische Fabriken, 46238 Bottrop (DE); Porr Bau GmbH, 1100 Wien (AT)
(72) Erfinder: HÖRLEIN, Norbert, 1220 Wien (AT); KLEEN, Eugen, 46514 Schermbeck (DE)
(74) Vertreter: Zenz Patentanwälte Partnerschaft mbB

(56) Entgegenhaltungen:
- DE-A1- 3 126 890
- DE-B3-102009 008 451
- US-A- 5 645 375
- DATABASE WPI Week 198018 Thomson Scientific, London, GB; AN 1980-31884C XP002741435, & JP S55 39564 A (TAKIGAWA T) 19. März 1980 (1980-03-19)
- M. Thewes ET AL: "Mörtel im Tunnelbau Stand der Technik und aktuelle Entwicklungen zur Verfüllung des Ringspaltes bei Tunnelvortriebsmaschinen", BauPortal 12/2009, 31. Dezember 2009 (2009-12-31), Seiten 706-711, XP055198529, Gefunden im Internet: URL:http://www.baumaschine.de/fachzeitschr iften/baumaschinen/bauportal_dateien/2009/ heft12/a706_711.pdf/at_download/file [gefunden am 2015-06-26]

## Beschreibung

Die Erfindung betrifft ein Verfahren zum Verfüllen eines Ringraums zwischen der Außenfläche eines Tübbingrings und einem ihm umgebenden Baugrund eines Tunnelbauwerks durch Einbringen eines Baustoffgemischs, bei dem eine flüssige Grundkomponente zur Herstellung des Baustoffgemischs durch eine Rohrleitung von einem entfernten Bereitstellungsort zu einer Tunnelvortriebsmaschine herantransportiert wird, wobei die flüssige Grundkomponente eine ein Tonmineral-Schichtsilikat und ein hydraulisches Bindemittel und Wasser enthaltende Mischung ist und eine verzögerte Abbindezeit aufweist, wobei der Grundkomponente am Ort der Tunnelvortriebsmaschine eine Aktivatorkomponente derart zugemischt wird, dass ein Gemisch gebildet wird, dass nach einer kurzen Reaktionszeit eine Gel-Konsistenz erlangt.

Einen Überblick über den Stand der Technik zur Verfüllung des Ringspaltes bei Tunnelvortriebsmaschinen gibt der Artikel von Markus Thewes und Christoph Budach, "Mörtel im Tunnelbau - Stand der Technik und aktuelle Entwicklungen zur Verfüllung des Ringspaltes bei Tunnelvortriebsmaschinen", BauPortal 12/2009. Ein Verfahren der eingangs genannten Art wird dort im Absatz "Zwei-Komponenten (2-K-) Verpressmaterialien" auf den Seiten 708 und 709 beschrieben. Die Grundkomponente, dort Komponente A genannt, enthält Wasser, Bentonit, Zement und einen Stabilisator (d. h. einen Abbindeverzögerer). Die Aktivatorkomponente, dort Komponente B genannt, enthält neben Wasser einen Beschleuniger, hier als Aktivator bezeichnet. Auf Seite 709 ist im ersten vollständigen Absatz beschrieben, dass nach dem Vermischen der beiden Komponenten durch eine kurze Reaktionszeit im Ringspalt ein Gel entsteht, welches anschließend aushärtet.

Die US 5,645,375 A beschreibt ein Verfahren zur Ringraumverfüllung, bei dem eine Zementschlämme mit einem Schaummittel gemischt, dieses Gemisch in die Nähe des Einbringungsorts gepumpt, dort mit einer über eine separate Rohrleitung herangeführte Natriumsilikatlösung und mit über eine weitere Leitung herangeführte Druckluft gemischt wird und die Zementschlämme-Natriumsilikat-Luft-Mischung dann durch einen statischen Mischer hindurchgeführt wird, um einen Gemisch-Schaum zu erzeugen, der dann über eine kurze Leitung in den Ringraum eingebracht wird. Der Schaumzement habe gegenüber herkömmlichen zur Ringraumverfüllung verwendeten Materialien eine erhöhte Viskosität, so dass er nicht seitlich innerhalb des Ringraums herabfließen kann. Außerdem beginnt er nach kurzer Zeit abzubinden.

Ausgehend von diesem Stand der Technik liegt der Erfindung die Aufgabe zugrunde, ein Verfahren zum Verfüllen eines Ringraums zu schaffen, welches es erlaubt, die Eigenschaften der eingebrachten Baustoffmischung gezielter einstellen zu können, insbesondere Ergebnisse von Laborversuchen besser in reale Anwendungsfälle zu übertragen.

Diese Aufgabe wird erfindungsgemäß durch ein Verfahren mit den Merkmalen des Anspruchs 1 gelöst. Bei dem erfindungsgemäßen Verfahren zum Verfüllen eines Ringraums zwischen der Außenfläche eines Tübbingrings und einem ihn umgebenden Baugrund eines Tunnelbauwerks durch Einbringen eines Baustoffgemischs wird eine flüssige Grundkomponente zur Herstellung des Baustoffgemischs durch eine Rohrleitung von einem entfernten Bereitstellungsort zu einer Tunnelvortriebsmaschine herantransportiert, wobei die flüssige Grundkomponente eine wenigstens ein Tonmineral-Schichtsilikat, wenigstens ein hydraulisches und/oder latent-hydraulisches Bindemittel und Wasser enthaltende Mischung ist, nur feinkörnige Partikel unter etwa 5 mm Durchmesser enthält und entweder nicht selbstständig abbindet oder eine Abbindezeit aufweist, die auf mehr als 24 Stunden, vorzugsweise mehr als 72 Stunden, verzögert ist. Dann wird der Grundkomponente am Ort der Tunnelvortriebsmaschine eine Aktivatorkomponente derart zugemischt, dass ein Gemisch gebildet wird, dass nach einer kurzen Reaktionszeit von weniger als 5 min, vorzugsweise weniger als 3 min, besonders bevorzugt von weniger als 1 min, eine Gel-Konsistenz erlangt. Der Grundkomponente und/oder der Aktivatorkomponente und/oder dem gebildeten Gemisch wird eine Tensidkomponente zugemischt. Das Gemisch aus Grundkomponente, Aktivatorkomponente und Tensidkomponente wird durch eine als Begasungsstrecke ausgebildete rohrförmige Strömungskammer eines Schaumgenerators hindurchgeführt, wobei dem Gemisch über eine gasdurchlässige poröse Wandung der Begasungsstrecke Luft zugemischt wird, indem einer die rohrförmige Strömungskammer zumindest teilweise umschließenden Druckkammer des Schaumgenerators Druckluft zugeführt wird, wodurch ein Schaum enthaltendes Gemisch gebildet wird. Das Schaum enthaltende Gemisch wird in den Ringraum eingebracht, wobei es in dem Ringraum nach der kurzen Reaktionszeit die Gel-Konsistenz erlangt und nachfolgend aushärtet. Der Druck der Druckluft in der Druckkammer wird in Abhängigkeit von der Porengröße der porösen Wandung der Begasungsstrecke und in Abhängigkeit von dem Druck, mit dem das Schaum enthaltende Gemisch in den Ringraum eingebracht wird, so eingestellt, dass eine vorgegebene Schaummenge mit einer vorgegebenen Verteilung der Luftbläschengrößen in das Gemisch aus Grundkomponente, Aktivatorkomponente und Tensidkomponente eingebracht wird.

Indem die Druckluft durch die gasdurchlässige poröse Wandung der Begasungsstrecke in das Gemisch eintritt, kann eine definierte Größenverteilung und Dichte der Luftbläschen erreicht werden. Damit sind die Eigenschaften des Schaums in Abhängigkeit von den Bestandteilen des Gemischs und den Anwendungsbedingungen im Ringspalt einstellbar. Der zum Verfüllen des Ringraums verwendete Baustoffschaum hat vorteilhafterweise eine hohe Kompressibilität. Indem die Luft erst am Ort des Einbringens in den Ringspalt zugemischt wird und hierfür einen Schaumgenerator verwendet wird, durch den das Gemisch aus Grundkomponente, Aktivatorkomponente und Tensidkomponente hindurchgeführt wird, wird die Heranführung verbessert, da eine schaumfreie Grundkomponente, insbesondere über längere Strecken, besser pumpbar ist.

Bei einer bevorzugten Weiterbildung dieses Verfahrens wird die vorgegebene Schaummenge mit der vorgegebenen Verteilung der Luftbläschengrößen zuvor mittels Versuchen in Abhängigkeit von vorgegebenen Eigenschaften des Baugrunds bestimmt. Vorzugsweise wird das Schaum enthaltende Gemisch in den Ringraum mit einem Druck eingebracht, der den Wasserdruck des im Baugrund anstehenden Wassers übersteigt.

Bei einer bevorzugten Ausführungsform des erfindungsgemäßen Verfahrens liegt der Anteil der Aktivatorkomponente zwischen 1 % und 5 %, vorzugsweise zwischen 2 % und 4 %. Bevorzugt ist hierbei, dass die Aktivatorkomponente aus einem am Ort der Tunnelvortriebsmaschine befindlichen Vorratsspeicher entnommen wird. Dies ist insbesondere aufgrund der geringen Mengenanteile möglich.

Als Tonmineral-Schichtsilikat der Grundkomponente wird vorzugsweise ein Bentonit verwendet. Vorzugsweise wird ferner eine Grundkomponente verwendet, die ein latent-hydraulisches Bindemittel enthält. Besonders bevorzugt ist eine Grundkomponente, die als latent-hydraulisches Bindemittel gemahlenen Hüttensand enthält. Bei einer bevorzugten Weiterbildung dieser Ausführungsform wird eine Grundkomponente verwendet, die frei von Zementklinker ist. Die Grundkomponente kann vorzugsweise zusätzlich Kalksteinmehl und/oder Flugasche enthalten.

Bei dem bevorzugten Verfahren, das eine ein latent-hydraulisches Bindemittel enthaltende Grundkomponente verwendet, ist es bevorzugt, dass eine alkalische Aktivatorkomponente verwendet wird. Die bevorzugte Aktivatorkomponente enthält Wasserglas. Wasserglas, beispielsweise Natrium- oder Kaliumwasserglas, ist besonders preiswert. Alternativ kann eine Aktivatorkomponente verwendet werden, die ein Erdalkalioxid oder -hydroxid enthält, beispielsweise Calciumoxid bzw. -hydroxid oder eine Mischung von beidem. Bei einer alternativen Ausführungsform wird vorzugsweise eine Aktivatorkomponente verwendet, die ein Aluminat enthält.

Die Ausführungsform des erfindungsgemäßen Verfahrens, bei der Komponenten verwendet werden, die frei von Zementklinker sind und bei dem die Grundkomponente eine latent-hydraulisches Bindemittel, insbesondere Hüttensand, enthält, ermöglicht es, das Verfahren auch bei hohen Sulfatgehalten des Baugrunds anzuwenden. Insbesondere ein hochalkalischer Hüttensand (mit hohen Anteilen an Aluminiumoxid) bildet eine sulfatbeständige Baustoffmischung, die insbesondere auch mit Sulfaten reagieren und abbinden kann.

Vorteilhafte und/oder bevorzugte Weiterbildungen der Erfindung sind in den Unteransprüchen gekennzeichnet.

Im Folgenden wird die Erfindung anhand eines bevorzugten Verfahrens näher beschrieben.

Bei dem bevorzugten Verfahren zum Verfüllen eines Ringraums zwischen der Außenfläche eines Tübbingrings und einem ihn umgebenden Baugrund eines Tunnelbauwerks wird ein Baustoffgemisch eingebracht, das unmittelbar am Einbringungsort hergestellt wird. Dazu wird zunächst über eine Rohrleitung, welche mehrere Kilometer lang sein kann, eine dünnflüssige Grundkomponente herangeführt, welche entweder ein Bentonit-Zement-Gemisch oder ein Gemisch von Bentonit mit gemahlenem Hüttensand oder auch eine Kombination von beidem enthält und die weitere Füll- und/oder Zusatzstoffe enthalten kann. Die Grundkomponente enthält nur feinkörnige Partikel unter etwa 5 mm Durchmesser und Wasser. Sofern die Mischung Zement enthält, kann ihr ein Stabilisator oder Abbindeverzögerer derart zugegeben werden, dass ihre Abbindezeit auf mehr als 24 Stunden, vorzugsweise mehr als 72 Stunden, verzögert ist. Ein derartiger Abbindeverzögerer kann dann entfallen, wenn die Grundkomponente nicht selbstständig abbindet, beispielweise wenn diese ausschließlich ein latent-hydraulisches Bindemittel, insbesondere gemahlenen Hüttensand enthält.

Am Ort des Einbringens, das heißt am Ort der Tunnelvortriebsmaschine, wird dann die herangeführte flüssige Grundkomponente mit der Aktivatorkomponente vermischt. Die Aktivatorkomponente enthält Wasserglas und Wasser und ist ebenfalls dünnflüssig. Das Vermischen kann mit Hilfe einer Mischschnecke oder einer Mischdüse vorgenommen werden. Zusätzlich wird dem Gemisch eine Tensidkomponente zugemischt, wobei die Tensidkomponente entweder bereits der herantransportierten Grundkomponente zugemischt sein kann, oder der Aktivatorkomponente zugemischt ist. Schließlich ist es auch möglich, dass die Tensidkomponente erst dem hergestellten Gemisch aus Grundkomponente und Aktivatorkomponente zugemischt wird oder dass die drei Komponenten gleichzeitig vermischt werden. Das dann gebildete Gemisch aus Grundkomponente, Aktivatorkomponente und Tensidkomponente wird durch einen Schaumgenerator hindurchgeführt. Insbesondere wird das Gemisch durch eine als Begasungsstrecke ausgebildete rohrförmige Strömungskammer mit vorzugsweise zylindrischem Querschnitt hindurchgeführt. Die Außenwand der Strömungskammer ist durch ein poröses Material gebildet. Die Außenwand wird umgeben von einer Druckkammer, welcher Druckluft eines vorgegebenen Drucks zugeführt wird. Der Druck ist so eingestellt, dass eine vorgegebene Menge pro Zeiteinheit durch die poröse Wandung in die Strömungskammer eindringt und dort Luftbläschen vorgegebener Größe und Verteilung bildet. Die Luftbläschenverteilung und -größe ist einstellbar, so dass die Eigenschaften der entstehenden Baustoffmischung gezielt eingestellt werden können. Durch die gezielte Einstellung der Luftbläschengrößen und -verteilung ist es möglich, dass Ergebnisse von Laborversuchen besser in reale Anwendungsfälle übertragbar sind. Eine optimale Mörtelzusammensetzung kann durch Versuche ermittelt und dann reproduzierbar am Ort der Tunnelvortriebsmaschine erzeugt werden. Die Aktivatorkomponente, die nur in geringen Mengenanteilen von 2 bis 4 % zugegeben wird, kann am Ort der Tunnelvortriebsmaschine bevorratet werden.

Die bevorzugte Grundkomponente enthält neben dem Bentonit, dem gemahlenen Hüttensand und Wasser vorzugsweise weitere Komponenten, wie beispielsweise Flugasche und andere puzzolane Stoffe sowie inerte Stoffe, wie beispielsweise Kalksteinmehl und Gesteinskörnungen. Darüber hinaus können Zusatzstoffe eingemischt sein, die die Transportierbarkeit und Verarbeitbarkeit verbessern.

## Patentansprüche

1. Verfahren zum Verfüllen eines Ringraums zwischen der Außenfläche eines Tübbingrings und einem ihn umgebenden Baugrund eines Tunnelbauwerks durch Einbringen eines Baustoffgemischs, wobei:
a) eine flüssige Grundkomponente zur Herstellung des Baustoffgemischs durch eine Rohrleitung von einem entfernten Bereitstellungsort zu einer Tunnelvortriebsmaschine herantransportiert wird, wobei die flüssige Grundkomponente
eine wenigstens ein Tonmineral-Schichtsilikat, wenigstens ein hydraulisches und/oder latent-hydraulisches Bindemittel und Wasser enthaltende Mischung ist,
nur feinkörnige Partikel unter etwa 5 mm Durchmesser enthält und
entweder nicht selbständig abbindet oder eine Abbindezeit aufweist, die auf mehr als 24 Stunden, vorzugsweise mehr als 72 Stunden, verzögert ist,
b) der Grundkomponente am Ort der Tunnelvortriebsmaschine eine Aktivatorkomponente derart zugemischt wird, dass ein Gemisch gebildet wird, das nach einer kurzen Reaktionszeit von weniger als 5 min, vorzugsweise von weniger als 3 min, besonders bevorzugt von weniger als 1 min, eine Gel-Konsistenz erlangt,
c) der Grundkomponente und/oder der Aktivatorkomponente und/oder dem gebildeten Gemisch eine Tensidkomponente zugemischt wird,
d) das Gemisch aus Grundkomponente, Aktivatorkomponente und Tensidkomponente durch eine als Begasungsstrecke ausgebildete rohrförmige Strömungskammer eines Schaumgenerators hindurchgeführt wird, wobei dem Gemisch über eine gasdurchlässige poröse Wandung der Begasungsstrecke Luft zugemischt wird, indem einer die rohrförmige Strömungskammer zumindest teilweise umschließenden Druckkammer des Schaumgenerators Druckluft zugeführt wird, wodurch ein Schaum enthaltendes Gemisch gebildet wird, und
e) das Schaum enthaltende Gemisch in den Ringraum eingebracht wird, wobei es in dem Ringraum nach der kurzen Reaktionszeit die Gel-Konsistenz erlangt und nachfolgend aushärtet,
wobei der Druck der Druckluft in der Druckkammer in Abhängigkeit von der Porengröße der porösen Wandung der Begasungsstrecke und in Abhängigkeit von dem Druck, mit dem das Schaum enthaltende Gemisch in den Ringraum eingebracht wird, so eingestellt wird, dass eine vorgegebene Schaummenge mit einer vorgegebenen Verteilung der Luftbläschengrößen in das Gemisch aus Grundkomponente, Aktivatorkomponente und Tensidkomponente eingebracht wird.

2. Verfahren nach Anspruch 1, **dadurch gekennzeichnet, dass** die vorgegebene Schaummenge mit der vorgegebenen Verteilung der Luftbläschengrößen zuvor mittels Versuchen in Abhängigkeit von vorgegebenen Eigenschaften des Baugrunds bestimmt wird.

3. Verfahren nach Anspruch 1 oder2, **dadurch gekennzeichnet, dass** das Schaum enthaltende Gemisch in den Ringraum mit einem Druck eingebracht wird, der den Wasserdruck des im Baugrund anstehenden Wassers übersteigt.

4. Verfahren nach einem der Ansprüche 1 - 3, **dadurch gekennzeichnet, dass** der Anteil der Aktivatorkomponente zwischen 1 % und 5 %, vorzugsweise zwischen 2 % und 4 %, liegt.

5. Verfahren nach Anspruch 4, **dadurch gekennzeichnet, dass** die Aktivatorkomponente aus einem am Ort der Tunnelvortriebsmaschine befindlichen Vorratsspeicher entnommen wird.

6. Verfahren nach einem der Ansprüche 1 - 5, **dadurch gekennzeichnet, dass** als Tonmineral-Schichtsilikat der Grundkomponente ein Bentonit verwendet wird.

7. Verfahren nach einem der Ansprüche 1 - 6, **dadurch gekennzeichnet, dass** eine Grundkomponente verwendet wird, die ein latent-hydraulisches Bindemittel enthält.

8. Verfahren nach Anspruch 7, **dadurch gekennzeichnet, dass** eine Grundkomponente verwendet wird, die als latent-hydraulisches Bindemittel gemahlenen Hüttensand enthält.

9. Verfahren nach Anspruch 7 oder 8, **dadurch gekennzeichnet, dass** eine Grundkomponente verwendet wird, die frei von Zementklinker ist.

10. Verfahren nach einem der Ansprüche 7 - 9, **dadurch gekennzeichnet, dass** eine Grundkomponente verwendet wird, die zusätzlich Kalksteinmehl und/oder Flugasche enthält.

11. Verfahren nach einem der Ansprüche 7 - 10, **dadurch gekennzeichnet, dass** eine alkalische Aktivatorkomponente verwendet wird.

12. Verfahren nach Anspruch 11, **dadurch gekennzeichnet, dass** eine Aktivatorkomponente verwendet wird, die Wasserglas enthält.

13. Verfahren nach Anspruch 11, **dadurch gekennzeichnet, dass** eine Aktivatorkomponente verwendet wird, die ein Erdalkalioxid oder -hydroxid enthält.

14. Verfahren nach einem der Ansprüche 7 - 10, **dadurch gekennzeichnet, dass** eine Aktivatorkomponente verwendet wird, die ein Aluminat enthält.

## Claims

1. A method for filling a ring area between the outer surface of a tunnel section ring and a foundation of a tunnel structure surrounding it by introducing a construction material mixture, wherein:
a) a liquid basic component for producing the construction material mixture is transported from a remote supply point to a tunnel boring machine through a pipeline, wherein the liquid basic component
is a mixture containing at least one clay mineral phyllosilicate, at least one hydraulic and/or latent-hydraulic binder and water,
contains only small-grained particles with a diameter of less than approximately 5 mm and
either does not cure automatically or has a curing time that is delayed by more than 24 hours, preferably more than 72 hours,
b) an activator component is admixed to the basic component at the site of the tunnel boring machine in such a way that the mixture being produced reaches a gel consistency after a brief reaction time of less than 5 minutes, preferably less than 3 minutes, particularly less than 1 minute,
c) a tenside component is admixed to the basic component and/or the activator component and/or the mixture produced thereof,
d) the mixture consisting of basic component, activator component and tenside component is conveyed through a tubular flow chamber of a foam generator, which is realized in the form of a gas treatment section, wherein air is admixed to the mixture through a gas-permeable porous wall of the gas treatment section by supplying compressed air to a pressure chamber of the foam generator, which at least partially encloses the tubular flow chamber, such that a mixture containing foam is produced, and
e) the mixture containing foam is introduced into the ring area, wherein the mixture reaches the gel consistency in the ring area after a brief reaction time and subsequently hardens,
wherein the pressure of the compressed air in the pressure chamber is adjusted in dependence on the pore size of the porous wall of the gas treatment section and in dependence on the pressure, with which the mixture containing the foam is filled into the ring area, in such a way that a predefined foam quantity with a predefined distribution of air bubble sizes is introduced into the mixture consisting of basic component, activator component and tenside component.

2. The method according to claim 1, **characterized in that** the predefined foam quantity with the predefined distribution of air bubble sizes is determined beforehand in dependence on predefined properties of the foundation by means of experiments.

3. The method according to claim 1 or 2, **characterized in that** the mixture containing foam is filled into the ring area with a pressure that exceeds the water pressure of the water present in the foundation.

4. The method according to one of claims 1-3, **characterized in that** the proportion of the activator component lies between 1% and 5%, preferably between 2% and 4%.

5. The method according to claim 4, **characterized in that** the activator component is removed from a reservoir located at the site of the tunnel boring machine.

6. The method according to one of claims 1-5, **characterized in that** a bentonite is used as clay mineral phyllosilicate of the basic component.

7. The method according to one of claims 1-6, **characterized in that** the basic component used contains a latent-hydraulic binder.

8. The method according to claim 7, **characterized in that** the basic component used contains a latent-hydraulic binder in the form of granulated slag.

9. The method according to claim 7 or 8, **characterized in that** the basic component used is free of cement clinker.

10. The method according to one of claims 7-9, **characterized in that** the basic component used additionally contains pulverized limestone and/or flue-ash.

11. The method according to one of claims 7-10, **characterized in that** an alkaline activator component is used.

12. The method according to claim 11, **characterized in that** the activator component used contains water glass.

13. The method according to claim 11, **characterized in that** the activator component used contains an alkaline earth oxide or hydroxide.

14. The method according to one of claims 7-10, **characterized in that** the activator component used contains an aluminate.

## Revendications

1. Procédé destiné à combler un espace annulaire entre la surface extérieure d'un anneau de cuvelage et une terre de fondation qui l'entoure d'un ouvrage de tunnel, par introduction d'un mélange de matériaux de construction, lors auquel :
a) on transporte un composant de base liquide destiné à la préparation du mélange de matériaux de construction à travers une conduite, d'un lieu de préparation éloigné vers une machine à creuser des tunnels, le composant de base liquide étant un mélange contenant
au moins un phyllosilicate minéral argileux, au moins un liant hydraulique et/ou hydraulique latent et de l'eau,
ne contenant que des particules à grains fins d'un diamètre inférieur à environ 5 mm et
ne prenant soit pas de manière autonome ou présentant un temps de prise qui est retardé de plus de 24 heures, de préférence de plus de 72 heures,
b) sur le lieu de la machine à creuser des tunnels, on mélange au composant de base un composant activateur, de sorte à former un mélange qui après un bref temps de réaction inférieur à 5 minutes, de préférence inférieur à 3 min, de manière particulièrement préférentielle, inférieur 1 minute adopte la consistance d'un gel
c) on mélange au composant de base et/ou au composant activateur et/ou au mélange créé un composant tensioactif,
d) on fait passer le mélange du composant de base, du composant activateur et du composant tensioactif à travers une chambre d'écoulement tubulaire, conçue en tant que trajet de gazéification d'un générateur de mousse, par l'intermédiaire d'une paroi poreuse, perméable au gaz du trajet de gazéification, de l'air étant mélangé au mélange, en amenant de l'air comprimé à une chambre de compression du générateur de mousse entourant au moins partiellement la chambre d'écoulement tubulaire, ce qui a pour effet de créer un mélange contenant de la mousse, et
e) on introduit le mélange contenant de la mousse dans l'espace annulaire, sachant qu'après un bref temps de réaction, il adopte dans l'espace annulaire la consistance d'un gel et durcit par la suite,
la pression de l'air comprimé dans la chambre de compression étant réglée en fonction de la taille des pores de la paroi poreuse du trajet de gazéification et en fonction de la pression à laquelle le mélange contenant de la mousse est introduite dans l'espace annulaire, de telle sorte qu'une quantité de mousse prédéfinie soit introduite avec une distribution prédéfinie de la taille des bulles d'air dans le mélange du composant de base, du composant activateur et du composant tensioactif.

2. Procédé selon la revendication 1, **caractérisé en ce que** la quantité de mousse prédéfinie avec la distribution prédéfinie des tailles des bulles d'air est déterminée au préalable par des essais en fonction de propriétés prédéfinies du sol de fondation.

3. Procédé selon la revendication 1 ou 2, **caractérisé en ce qu'**on introduit le mélange contenant de la mousse dans l'espace annulaire sous une pression qui dépasse la pression de l'eau stagnant dans le sol de fondation.

4. Procédé selon l'une quelconque des revendications 1 à 3, **caractérisé en ce que** la part du composant activateur se situe entre 1 % et 5 %, de préférence entre 2 % et 4 %.

5. Procédé selon la revendication 4, **caractérisé en ce que** le composant activateur est prélevé dans un réservoir de stockage se trouvant sur le lieu de la machine à creuser des tunnels.

6. Procédé selon l'une quelconque des revendications 1 à 5, **caractérisé en ce qu'**en tant que phyllosilicate minéral argileux du composant de base, on utilise une bentonite.

7. Procédé selon l'une quelconque des revendications 1 à 6, **caractérisé en ce qu'**on utilise un composant de base qui contient un liant hydraulique latent.

8. Procédé selon la revendication 7, **caractérisé en ce qu'**on utilise un composant de base qui en tant que liant hydraulique latent contient du laitier granulé.

9. Procédé selon la revendication 7 ou 8, **caractérisé en ce qu'**on utilise un composant de base qui est exempt de clinker de ciment.

10. Procédé selon l'une quelconque des revendications 7 à 9, **caractérisé en ce qu'**on utilise un composant de base qui contient en supplément du calcaire en poudre et/ou de la cendre volante.

11. Procédé selon l'une quelconque des revendications 7 à 10, **caractérisé en ce qu'**on utilise un composant activateur alcalin.

12. Procédé selon la revendication 11, **caractérisé en ce qu'**on utilise un composant activateur qui contient du verre soluble.

13. Procédé selon la revendication 11, **caractérisé en ce qu'**on utilise un composant activateur qui contient un oxyde ou un hydroxyde alcalino-terreux.

14. Procédé selon l'une quelconque des revendications 7 à 10, **caractérisé en ce qu'**on utilise un composant activateur qui contient un aluminate.
